Europäisches Patentamt

European Patent Office

Office européen des brevets

(11) Numéro de publication: **0 307 273 B1**

# FASCICULE DE BREVET EUROPEEN

(45) Date de publication de fascicule du brevet: **15.04.92** (51) Int. Cl.⁵: **B60R 1/06**

(21) Numéro de dépôt: **88402137.9**

(22) Date de dépôt: **23.08.88**

(54) **Dispositif de commande à trois câbles d'un support de miroir pour rétroviseur de véhicule.**

(30) Priorité: **09.09.87 FR 8712503**

(43) Date de publication de la demande:
**15.03.89 Bulletin 89/11**

(45) Mention de la délivrance du brevet:
**15.04.92 Bulletin 92/16**

(84) Etats contractants désignés:
**DE ES GB IT NL SE**

(56) Documents cités:
**FR-A- 2 416 134**
**FR-A- 2 426 590**
**US-A- 4 585 200**

(73) Titulaire: **SOCIETE MANZONI BOUCHOT**
**Zone Industrielle "Le Plan d'Acier" Boîte Postale No 9**
**F-39200 Saint-Claude(FR)**

(72) Inventeur: **Manzoni, Bernard Antoine Jean**
**Lotiss. Les Genevriers Avignon Les Saint-Claude**
**F-39299 Saint Claude(FR)**

(74) Mandataire: **Caunet, Jean et al**
**Cabinet BEAU DE LOMENIE 55, rue d'Amsterdam**
**F-75008 Paris(FR)**

Rank Xerox (UK) Business Services

## Description

La présente invention concerne un dispositif de commande à trois câbles d'un support de miroir pour rétroviseur de véhicule et notamment de véhicule automobile comme décrit dans le préambule de la revendication 1.

Un tel dispositif est connu par le brevet français FR-A-2 431 939. Il comprend entre, d'une part, une platine fixe sur laquelle sont bridées les gaines des câbles et, d'autre part, le support du miroir, un croisillon présentant quatre tourillons alignés deux à deux suivant deux directions perpendiculaires et montés dans des chapes clipsables de la platine et du support respectivement, afin de permettre le pivotement ciel-terre autour d'un premier axe et le pivotement gauche-droite autour d'un deuxième axe sous la commande des trois câbles dont les extrémités sont accrochées pour l'un sur le croisillon et pour les deux autres sur le support ou inversement pour l'un sur le support et pour les deux autres sur le croisillon.

Ce rétroviseur connu présente un inconvénient selon lequel le miroir vibre lorsque le moteur fonctionne, que le véhicule soit à l'arrêt ou qu'il circule. Le miroir reflète alors une image "tremblée" et ne peut garantir une qualité de conduite parfaite.

La présente invention vise à supprimer les vibrations, tout en conservant la possibilité de régler avec précision l'orientation ciel-terre, gauche-droite du miroir.

Dans une réalisation connue, le dispositif de commande à trois câbles comporte, pour atténuer les vibrations, deux jupes sphériques faisant corps avec la platine et respectivement le support, ces jupes frottant librement l'une contre l'autre et délimitant entre elles une cavité dans laquelle le croisillon est logé librement.

Dans ces dispositifs connus, la résistance aux vibrations n'est pas parfaite.

La présente invention a pour but d'annihiler de façon durable les vibrations du miroir et de règler la résistance à ces vibrations indépendamment suivant le pivotement ciel-terre et le pivotement gauche-droite. En outre, elle vise à réduire le coût de fabrication et de montage du rétroviseur.

Dans ce but et conformément à l'invention, les tourillons de chaque paire étant plus éloignés les uns des autres que ceux des croisillons connus, le croisillon comporte des portées de guidage s'étendant perpendiculairement à un axe de pivotement pour coopérer avec des pattes de frottement du support de miroir et d'autres portées de guidage s'étendant perpendiculairement à l'autre axe de pivotement pour coopérer avec des pattes de frottement de la platine fixe.

Suivant une forme de réalisation particulièrement avantageuse, le croisillon est un cadre carré ou rectangulaire dont deux côtés parallèles présentent en saillie des tourillons clipsés dans des paliers ouverts qui font corps avec le support de miroir suivant l'axe de pivotement droite-gauche, ce support faisant corps également avec des pattes de frottement mises en contact avec lesdits deux côtés formant portées de guidage, cependant que les deux autres côtés parallèles du cadre présentent en saillie des tourillons clipsés dans des paliers ouverts qui font corps avec la platine suivant l'axe de pivotement ciel-terre, cette platine faisant corps également avec des pattes de frottement mises en contact avec lesdits deux autres côtés formant portées de guidage.

Par ailleurs, le cadre peut être ajouré dans sa partie centrale pour livrer passage aux extrémités de deux câbles accrochées sur le support de miroir, ce cadre présentant une nervure médiane sur laquelle est accrochée l'extrémité du troisième câble.

Une forme de réalisation de l'objet de l'invention est représentée, à titre d'exemple non limitatif, sur le dessin annexé.

Sur ce dessin :
- la figure 1 est une perspective schématique illustrant cette forme de réalisation du dispositif perfectionné selon l'invention.
- la figure 2 est une vue en plan de dessus de ce dispositif,
- la figure 3 est une coupe-élévation prise suivant la ligne III-III de la figure 2,
- la figure 4 est une coupe en plan prise suivant la ligne IV-IV de la figure 3,
- la figure 5 est une élévation prise suivant la ligne V-V de la figure 2.

Le rétroviseur comporte, ainsi que cela est bien connu, un boîtier ou coupelle en matière plastique, non représenté sur le dessin. Le boîtier est monté pivotant autour d'un axe sensiblement vertical sur une console fixée sur le véhicule (la portière ou la carrosserie s'il s'agit d'un véhicule automobile) et est immobilisé en position neutre par un moyen d'indexage de sorte que ledit boîtier est normalement fixe, mais peut être effacé vers l'avant ou vers l'arrière, notamment au cours d'un choc.

Dans ce boîtier, est fixée une platine 1 de préférence en matière plastique moulée qui comporte des brides 2 permettant la fixation des gaines flexibles 3 à 5 de trois câbles de commande 6 à 8. Les gaines 3 à 5 traversent le boîtier, la console et la portière ou la carrosserie et sont fixées sur un embout fixé dans celle-ci en trois points équiangles et équidistants de l'axe de cet embout. Les câbles 6 à 8 coulissant dans ces gaines sont accrochés de la même façon géométrique dans une rotule montée pivotante autour de son centre dans toutes les directions par rapport audit embout qui supporte cette rotule, laquelle est munie d'un levier de manoeuvre. Le dispositif de manoeuvre décrit ci-dessus est bien connu et ne fait pas partie, même s'il est utilisé, de l'invention ; c'est la raison pour laquelle il n'est pas représenté. En tout cas, il s'agit de transmettre par les câbles à un support 9 de miroir 10, monté oscillant relativement à la platine 1, les mouvements communiqués par l'opérateur au levier précité.

Ainsi que cela ressort clairement du dessin, un croisillon 11 est interposé entre la platine 1 et le support 9 de miroir. Ce croisillon comporte :

- deux tourillons 12 et 13 alignés suivant l'axe 14 de pivotement gauche-droite et beaucoup plus écartés l'un de l'autre que sur les croisillons connus,
- et deux tourillons 15 et 16 alignés suivant l'axe 17 de pivotement ciel-terre et beaucoup plus écartés l'un de l'autre que sur les croisillons connus, ces deux axes 14 et 17 étant concourrants.

Suivant la forme de réalisation représentée sur le dessin, le croisillon 11 est un cadre de forme carrée dont :

- deux côtés 18 et 19 présentant en saillie les tourillons 12 et 13 s'étendent perpendiculairement à l'axe 14 de ceux-ci et constituent des portées de guidage en pivotement gauche-droite.
- et les deux autres côtés 20 et 21 présentant en saillie les tourillons 15 et 16 s'étendent perpendiculairement à l'axe 17 de ceux-ci et constituent des portées de guidage en pivotement ciel-terre.

Bien entendu, le cadre peut être rectangulaire au lieu d'être carré.

Les tourillons 12 et 13 sont supportés par des paliers 22 et 23 du support 9 de miroir 10, tandis que les tourillons 15 et 16 sont supportés par des paliers 24 et 25 de la platine 1. Avantageusement, les paliers 22 et 23, 24 et 25 sont des chapes venues de moulage avec le support 10, respectivement la platine 1 et ces chapes sont rétrécies près de leur ouverture pour permettre un montage et un démontage faciles par clipsage des tourillons 12 et 13, respectivement 15 et 16.

Les portées 18 à 21 sont destinées à guider et à s'opposer par frottement aux vibrations. A cet effet, la portée 18 coopère avec deux pattes de frottement 26, 27 venues de moulage avec le support 9 et disposées de part et d'autre du tourillon 12 ; de même, la portée 19 coopère avec deux pattes de frottement 28, 29 venues de moulage avec ledit support 9 et disposées de part et d'autre du tourillon 13. Par contre, la portée 20 coopère avec deux pattes de frottement 30, 31 venues de moulage avec la platine 1 et disposées de part et d'autre du tourillon 15 ; de même, la portée 21 coopère avec deux pattes de frottement 32, 33 venues de moulage avec ladite platine 1 et disposées de part et d'autre du tourillon 16.

Dès lors que les paliers 22 à 25 sont relativement éloignés les uns des autres et que des portées de guidage 18 à 21 sont prévues, dès lors également que ces portées coopèrent avec des pattes de frottement 30 à 33, 26 à 29 appartenant pour un axe à la platine 1 et pour l'autre axe au support 9, le guidage est très précis et très doux ; l'absence de jeu et de déformations ainsi que la structure relativement massive conduisent alors à une résistance élevée aux vibrations et à une conservation absolue des règlages.

De plus, il est possible de règler la résistance aux vibrations suivant le pivotement ciel-terre, indépendamment de celle aux vibrations suivant le pivotement gauche-droit, en intervenant sur la surface des pattes 30 à 33 et des pattes 26 à 29, sur leur état de surface, sur leur rigidité ou souplesse relative ...

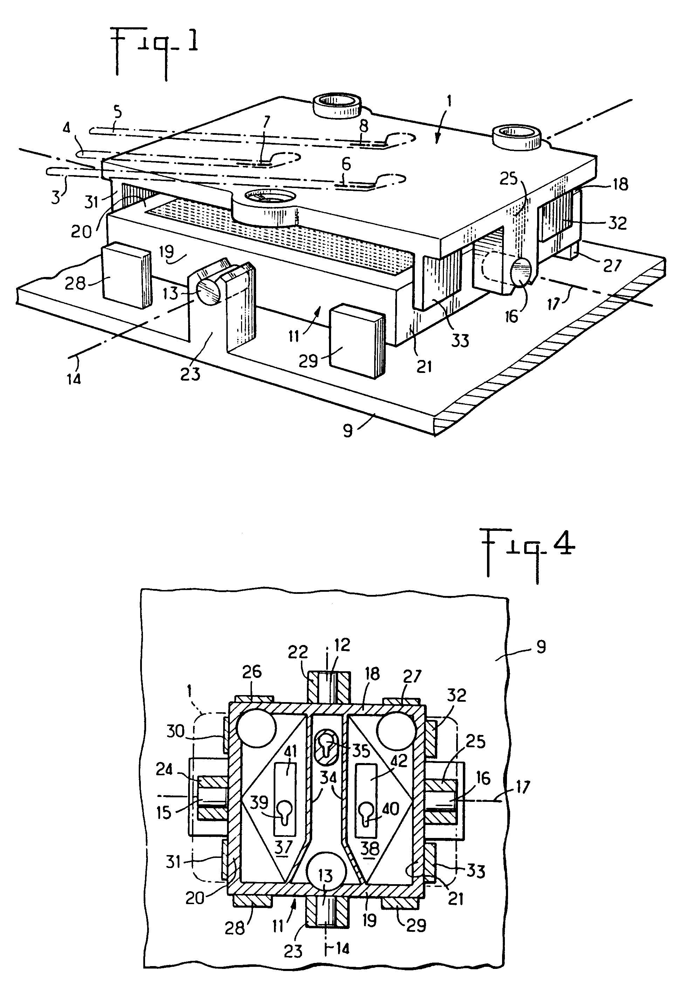

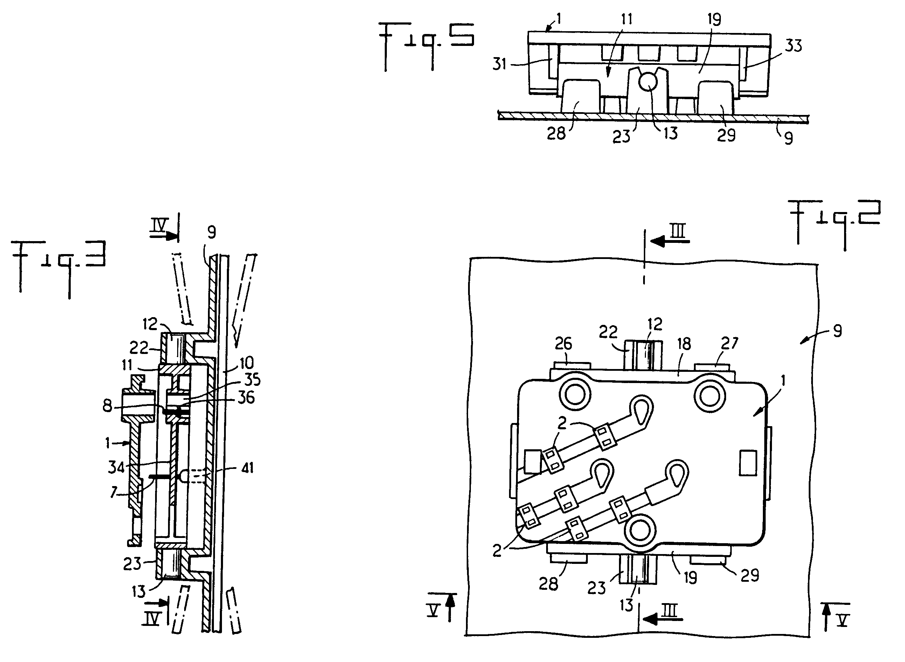

Comme le montrent les figures 3 et 4, le cadre 11 comporte une traverse 34 présentant une boutonnière 35 à cran de prise pour la tête terminale 36 de l'extrémité libre du câble 8. Ce cran de la boutonnière 35 est situé sur l'axe 14 gauche-droite à une distance suffisante de l'axe 17 pour commander le pivotement ciel-terre autour de ce dernier axe 17.

Le cadre 11 délimite, de part et d'autre de la traverse 34, des ajourages 37, 38 livrant passage aux câbles 6 et 7 dont les têtes terminales sont susceptibles d'être prises par des crans de boutonnières 39, 40 ménagées dans des protubérances 41, 42 faisant saillie sur le support 9 de miroir 10. Ces crans sont situés à une distance suffisante de l'axe 14 pour commander le pivotement gauche-droite autour de cet axe.

Il est bien évident que les paliers 22 et 23 ainsi que les pattes de frottement 26 à 29 peuvent être portés par la platine 1, les paliers 24 et 25 ainsi que les pattes 30 à 33 étant alors portés par le support 9 de miroir 10.

## Revendications

1. Dispositif de commande à trois câbles d'un support de miroir pour rétroviseur de véhicule, comprenant entre, d'une part, une platine fixe (1) sur laquelle sont bridées les gaines (3 à 5) des câbles (6 à 8) et, d'autre part, le support (9) du miroir (10), un croisillon (11) présentant quatre tourillons (12, 13, 15, 16) alignés deux à deux suivant deux directions perpendiculaires (14, 17) et montés dans des chapes clipsables (22 à 25) de la platine et du support respectivement afin de permettre le pivotement ciel-terre autour d'un premier axe (17) et le pivotement gauche-droite autour d'un deuxième axe (14) sous la commande des trois câbles dont l'un et les deux autres sont accrochés à leur extrémité libre indifféremment sur les éléments mobiles constitués par le croisillon et le support,

caractérisé en ce que, les tourillons (12 et 13 ; 15 et 16) de chaque paire étant plus éloignés les uns des autres que ceux des croisillons connus, le croisillon (11) comporte des portées de guidage (18, 19) s'étendant perpendiculairement à un axe de pivotement (14) pour coopérer avec des pattes de frottement (26 à 29) du support (9) de miroir (10) et d'autres portées de guidage (20, 21) s'étendant perpendiculairement à l'autre axe de pivotement (17) pour coopérer avec des pattes de frottement (30 à 33) de la platine fixe (1).

2. Dispositif de commande selon la revendication 1, caractérisé en ce que le croisillon est un cadre carré (11) ou rectangulaire dont deux côtés parallèles (18, 19) présentent en saillie des tourillons (12, 13) clipsés dans des paliers ouverts (22, 23) qui font corps avec le support (9) de miroir (10) suivant l'axe de pivotement (14) gauche-droite, ce support (9) faisant corps également avec des pattes de frottement (26 à 29) mises en contact avec lesdits deux côtés formant portées de guidage, cependant que les deux autres côtés parallèles (20, 21) du cadre (11) présentent en saillie des tourillons (15, 16) clipsés dans des paliers ouverts (24, 25) qui font corps avec la platine (1) suivant l'axe de pivotement (17) ciel-terre, cette platine (1) faisant corps également avec des pattes de frottement (30 à 33) mises en contact avec lesdits deux autres côtés.

3. Dispositif selon la revendication 2, caractérisé en ce que le cadre (11) est ajouré (37, 38) dans sa partie centrale pour livrer passage aux extrémités de deux câbles (6, 7) accrochées sur le support (9) de miroir (10), ce cadre (11) présentant une traverse médiane (34) sur laquelle est accrochée l'extrémité du troisième câble (8).

## Claims

1. Device incorporating three cables for controlling a mirror support for a rearview mirror, comprising between, on the one hand, a fixed plate (1) on which are flanged the sleeves (3 to 5) of the cables (6 to 8) and, on the other hand, the support (9) of the mirror (10), a crosspiece (11) presenting four journals (12, 13, 15, 16) aligned in two's in two perpendicular directions (14, 17) and mounted in clippable fork joints (22 to 25) on the plate and on the support, respectively, in order to allow up-down pivoting about a first axis (17) and left-right pivoting about a second axis (14) under the control of the three cables of which one and the other two are fastened on their free end, indifferently on the movable elements constituted by the crosspiece and the support, characterized in that, each pair of journals (12 and 13 ; 15 and 16) being more remote from one another than those of known crosspieces, the crosspiece (11) has guiding bearing surfaces (18, 19) which extend perpendicularly to a pivoting axis (14) in order to cooperate with friction tabs (26 to 29) on the support (9) of the mirror (10) and other guiding bearing surfaces (20, 21) which extend perpendicularly to the other pivot axis (17) in order to cooperate with friction tabs (30 to 33) on the fixed plate (1).

2. Control device according to claim 1, characterized in that the crosspiece is a square or rectangular frame (11) of which two parallel sides (18, 19) have projecting journals (12, 13) clipped in open bearings (22, 23) which are integral with the support (9) of the mirror (10) along the right-left pivot axis (14), said support (9) also being integral with friction tabs (26 to 29) placed in contact with said two sides forming guiding bearing surfaces, while the other two parallel sides (20, 21) of the frame (11) have projecting journals (15, 16) clipped in open bearings (24, 25) which are integral with the plate (1) along the up-down pivot axis (17), said plate (1) being also integral with friction tabs (30 to 33) placed in contact with said other two sides.

3. Device according to claim 2, characterized in that the frame (11) is perforated (37, 38) in its central part to permit passage of the ends of two cables (6,7) which are fastened on the support (9) of the mirror (10), said frame (11) having a median rib (34) on which the end of the third cable (8) is fastened.

## Patentansprüche

1. Bedienungsvorrichtung mit drei Kabeln für einen Fahrzeugrückspiegelhalter, die zwischen, einerseits, einer festen Platte (1), auf der die Hüllen (3 bis 5) der Kabel (6 bis 8) angeflanscht sind, und, andererseits, dem Halter (9) des Spiegels (10) einen Kreuzzapfen (11) mit vier Kippzapfen (12, 13, 15, 16) aufweist, die paarweise längs zweier zueinander senkrechten Richtungen (14, 17) ausgerichtet und in Einrastaufnahmen (22 bis 25) der Platte bzw. des Halters montiert sind, um das Himmel-Erde-Schwenken um eine erste Achse (17) und das Links-Rechts-Schwenken um eine zweite Achse (14) bei der Bedienung der drei Kabel zu ermöglichen, von denen das eine und die beiden anderen an ihrem freien Ende indifferent an den durch den Kreuzzapfen und den Halter gebildeten beweglichen Elementen befestigt sind,
dadurch **gekennzeichnet,**
daß die Kippzapfen (12 und 13; 15 und 16) jedes Paares voneinander weiter als die der bekannten Kreuzzapfen entfernt sind und der Kreuzzapfen (11) Führungsbereiche (18, 19), die sich senkrecht zur einen Schwenkachse (14) erstrecken, um mit Reibungsstreifen (26 bis 29) des Halters (9) des Spiegels (10) zusammenzuwirken, und andere Führungsbereiche (20, 21) aufweist, die sich senkrecht zur anderen Schwenkachse (17) erstrecken, um mit Reibungsstreifen (30 bis 33) der festen Platte (1) zusammenzuwirken.

2. Bedienungsvorrichtung nach dem Anspruch 1, dadurch gekennzeichnet,
daß der Kreuzzapfen ein quadratischer oder rechteckiger Rahmen (11) ist, dessen zwei Parallele Seiten (18, 19) vorspringende Kippzapfen (12, 13) aufweisen, die in offene Lager (22, 23), die mit dem Halter (9) des Spiegels (10) einstückig sind, längs der Links-Rechts-Schwenkachse (14) eingerastet sind, wobei der Halter (9) ebenfalls mit Reibungsstreifen (26 bis 29) einstükkig ist, die in Kontakt mit den beiden die Führungsbereiche bildenden Seiten gebracht sind, während die zwei anderen Parallelen Seiten (20, 21) des Rahmens (11) vorspringende Kippzapfen (15, 16) aufweisen, die in offene Lager (24, 25), die mit der Platte (1) einstükkig sind, längs der Himmel-Erde-Schwenkachse (17) eingerastet sind, wobei diese Platte (1) ebenfalls mit Reibungsstreifen (30 bis 33) einstückig ist, die in Kontakt mit den beiden anderen Seiten gebracht sind.

3. Vorrichtung nach dem Anspruch 2, dadurch gekennzeichnet,
daß der Rahmen (11) in seinem mittleren Teil durchbrochen (37, 38) ist, um einen Durchlaß für die Enden zweier Kabel (6, 7) zu ergeben, die am Halter (9) des Spiegels (10) befestigt sind, wobei der Rahmen (11) eine mittlere Traverse (34) aufweist, an der das Ende des dritten Kabels (8) befestigt ist.

EP 0 307 273 B1

Fig-1

Fig-4

Fig.5

Fig.3

Fig.2

EP 0 307 273 B1